(19) Europäisches Patentamt
European Patent Office
Office européen des brevets

(11) EP 3 080 852 B1

(12) # EUROPEAN PATENT SPECIFICATION

(45) Date of publication and mention of the grant of the patent:
**21.02.2018 Bulletin 2018/08**

(21) Application number: **14721563.6**

(22) Date of filing: **27.02.2014**

(51) Int Cl.:
***H01M 2/16*** (2006.01) ***H01M 10/052*** (2010.01)
***C01B 32/194*** (2017.01)

(86) International application number:
**PCT/SI2014/000011**

(87) International publication number:
**WO 2015/088451 (18.06.2015 Gazette 2015/24)**

(54) **CHEMICALLY MODIFIED REDUCED GRAPHENE OXIDE AS A SEPARATOR MATERIAL IN SULFUR-CONTAINING BATTERIES**

CHEMISCH MODIFIZIERTES REDUZIERTES GRAPHENOXID ALS SEPARATORMATERIAL BEI SCHWEFELHALTIGEN BATTERIEN

OXYDE DE GRAPHÈNE RÉDUIT MODIFIÉ CHIMIQUEMENT UTILISÉ COMME MATÉRIAU DE SÉPARATEUR DANS DES BATTERIES CONTENANT DU SOUFRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2013 SI 201300414**

(43) Date of publication of application:
**19.10.2016 Bulletin 2016/42**

(73) Proprietors:
- **Kemijski Institut**
  **1000 Ljubljana (SI)**
- **Center odlicnosti nizkoogljicne tehnologije**
  **1000 Ljubljana (SI)**

(72) Inventors:
- **VIZINTIN, Alen**
  **6320 Portoroz (SI)**
- **GENORIO, Bostjan**
  **1295 Ivancna Gorica (SI)**
- **GABERSCEK, Miran**
  **1230 Domzale (SI)**
- **DOMINKO, Robert**
  **1262 Dol pri Lujbljani (SI)**

(74) Representative: **Grünecker Patent- und Rechtsanwälte**
**PartG mbB**
**Leopoldstraße 4**
**80802 München (DE)**

(56) References cited:
**WO-A2-2009/143405 US-A1- 2012 302 683**
**US-A1- 2013 284 990**

- **XUEFENG WANG ET AL: "Reduced graphene oxide film as a shuttle-inhibiting interlayer in a lithium-sulfur battery", JOURNAL OF POWER SOURCES, vol. 242, 1 November 2013 (2013-11-01), pages 65-69, XP055125517, ISSN: 0378-7753, DOI: 10.1016/j.jpowsour.2013.05.063 cited in the application**
- **LOMEDA J R ET AL: "Diazonium Functionalization of Surfactant-Wrapped Chemically Converted Graphene Sheets", JOURNAL OF THE AMERICAN CHEMICAL SOCIETY, ACS PUBLICATIONS, US, vol. 130, no. 48, 7 November 2008 (2008-11-07), pages 16201-16206, XP002529648, ISSN: 0002-7863, DOI: 10.1021/JA806499W cited in the application**
- **KIAN PING LOH ET AL: "The chemistry of graphene", JOURNAL OF MATERIALS CHEMISTRY, vol. 20, no. 12, 1 January 2010 (2010-01-01), page 2277, XP055126145, ISSN: 0959-9428, DOI: 10.1039/b920539j**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 080 852 B1

## Description

### Field of the invention

The present invention relates to new graphene-based separator materials to be used in sulfur-containing batteries and to batteries comprising such materials.

### Background of the invention

In the recent past there has been a gradual increase in demand for clean, efficient and safe energy due to the ever increasing number of energy applications. The need for energy storage systems can partially be covered by rechargeable batteries, where Li-ion batteries having a relatively high energy-density present a system that can fulfill many of those needs. However, it is still desirable to further increase the energy-density of batteries, in particular in view of energy-demanding applications, such as electro mobility. Lithium-sulfur (Li-S) batteries have a very large theoretical maximum capacity of 1675 mAh/g and a maximum energy density of 2600 Wh/kg. They are therefore considered as having the potential to become the dominant means of storage of electrical energy, *e.g.,* in battery-driven electric cars. Nevertheless, Li-S batteries have so far not been commercialized in large scale, due to a number shortcomings of the currently applied technology.

Chemical processes in the Li-S cell include lithium dissolution from the anode surface and incorporation of lithium into sulfur or alkali metal polysulfide salts during discharge, and reverse lithium plating to the anode while charging. This contrasts with conventional lithium-ion cells, where the lithium ions are intercalated in the anode and cathodes. Consequently Li-S allows for a significantly higher lithium storage density. Polysulfides are reduced on the cathode surface in sequence while the cell is discharging:

$$S_8 \rightarrow Li_2S_8 \rightarrow Li_2S_6 \rightarrow Li_2S_4 \rightarrow Li_2S_3 \rightarrow Li_2S_2 \rightarrow Li_2S$$

At the opposite side of a porous or fibrous diffusion separator, sulfur polymers form at the cathode as the cell charges:

$$Li_2S \rightarrow Li_2S_2 \rightarrow Li_2S_3 \rightarrow Li_2S_4 \rightarrow Li_2S_6 \rightarrow Li_2S_8 \rightarrow S_8$$

These reactions are analogous to those in the sodium-sulfur battery. While S and $Li_2S$ are relatively insoluble in most electrolytes, many intermediate polysulfides are not. Dissolving lithium sulfides ($Li_2S_n$, n = 2, 3, 4, 6, 8) into electrolytes, and diffusion of the polysulfides from anode to cathode, or *vice versa,* may cause irreversible loss of active sulfur and performance.

One important component of sulfur-containing battery is the separator. Its function is to electrically separate the positive and the negative electrode in the electrochemical cell. The separator also serves to limit the amount of diffusion of polysulfides between anode and cathode. A separator is often a porous film or fibrous sheet of material, which material also serves as a reservoir for the electrolyte. A conventional porous or fibrous separator typically includes, *e.g.,* polyolefin such as polyethylene and polypropylene, and glass fiber, *e.g.,* in form of glass fiber filter paper. Recently thin ceramic films or ceramic fillers (particles) combined with a polyvinylidenfluorid- (PVDF-) binder were proposed as the separator material. The choice of the separator material is ideally inert towards other materials in the electrochemical cell. The separator should be thin, flexible, and it should possess good mechanical strength. The latter is particularly important in wound electrochemical cells.

Porous polyolefin films and glass fiber papers have been used as separator materials, due to their good mechanical properties and flexibility. On the other hand, these materials often have a very high porosity and thus a very high permeability for polysulfides. As already mentioned, the permeability for polysulfides is one of the reasons for a fast decrease of the capacity of Li-S batteries and limited life-time (some 10 to some 100 cycles). Ceramic separators in the form of a lithium-conductive nonporous membranes effectively stop diffusion of polysulfides from the cathode to the anode. However, a low ionic conductivity and the fragility of ceramic separators limit their application in wound cells. In order to circumvent problems with stability, ceramic fillers have been embedded into a polymer matrix. However, the voids between such ceramic fillers in the matrix result again in a relatively high porosity, which is of course counterproductive. Polysulfides can easily diffuse through these pores, away from the cathode composite, this leading to an irreversible loss of capacity.

Recent reports have shown that a hydrophobic polymeric membrane, Nafion®, is suitable for use as a separator, and can suppress undesired diffusion of polysulfides through the separator to a certain degree. Nafion® is a well known sulfonated tetrafluoroethylene based fluoropolymer-copolymer. Nafion® was discovered in the late 1960s. It is one of the first of a class of synthetic polymers with ionic properties which are called ionomers. Nafion®'s advantageous ionic

properties result from incorporating perfluorovinyl ether groups terminated with sulfonate groups onto a tetrafluoroethylene (Teflon®) backbone. When used as a separator material of a Li-S battery, Nafion® is typically deposited as a thin film on the surface of porous electrically insulating membrane which supports the Nafion® film. Nafion® separators have shown to reduce cycle-to-cycle loss of capacity, and to increase the coulombic efficiency within one cycle.

Graphene is one of the crystalline forms of carbon, alongside diamond, graphite, carbon nanotubes and fullerenes. In a graphene molecule, carbon atoms are arranged two-dimensionally in a regular hexagonal pattern. Graphene can be described as a one-atom thick layer of the layered mineral graphite. High-quality graphene is very strong, light, nearly transparent, and an excellent conductor of heat and electricity. Graphene-based materials are known and show promise for a variety of potential applications.

Single-atomic-layer carbon sheets referred to as "reduced graphene oxide" (RGO) have been generated by chemical exfoliation of graphite powders to graphene oxide sheets followed by deoxygenation to form the RGO sheets. This offers an effective route for bulk scale production of single-layered graphene based materials.

The use of RGO sheets in separators of sulfur-containing batteries, such as Li-S batteries, is generally known (Wang, X. et al. 2013, "Reduced graphene oxide film as a shuttle-inhibiting interlayer in a lithium-sulfur battery", Journal of Power Sources, 242: 65-69). These authors sandwiched RGO films between a sulfur cathode and the separator of a Li-S battery. Improved electrochemical properties were observed. The improved properties were attributed to the presence of remaining *polar* epoxy and carboxyl groups on the surface of the RGO sheets. These polar groups often remain on the RGO sheet surface, due to incomplete reduction of graphene oxide in a deoxygenation step. It is stated by the authors that the remaining polar (*i.e.,* hydroxy, carboxy and epoxy) groups on the surface of the RGO material were beneficial for retaining and accommodating the sulfur and polysulfides at the cathode side of the battery. Although the electrochemical performance of Li-S batteries comprising RGO sheets having a *hydrophilic* surface is superior to other types of Li-S batteries, the electrochemical performance of such batteries is still far from ideal. Further reduction of the cycle-to-cycle loss of capacity and increase the coulombic efficiency within one cycle is desired.

Surface modification of a graphene oxide material to produce a *hydrophobic* surface on graphene is generally known (e.g., Wang, Z. et al. 2012, in press: "Synthesis of fluorinated graphene with tunable degree of fluorination. Carbon, 2012). The authors describe the fluorination of graphene oxide sheets through simple hydrothermal reaction between homogeneously dispersed graphene oxide sheets and hydrofluoric acid (HF). The reaction results in a hydrophobic surface on the graphene oxide sheets. Fluorinated graphene oxide material is also known from Akshay et al. 2012 ("Synthesis of fluorinated graphene oxide and its amphiphobic properties", Part. Part. Syst. Charact., 30:266-272), and Robison et al. 2010 ("Properties of fluorinated graphene films", Nano Lett., 10: 3001-3005). The use of the such RGO sheets having hydrophobic properties as a separator material in sulfur-containing batteries is not envisaged.

Chemical modification of RGO using hydrophobic *organic* substituents was described by Lomeda et al. (2008, Diazonium functionalization of surfactant-wrapped chemically converted graphene sheets", JACS130: 16201-16206), cited by Dreyer et al. (2010, "The chemistry of graphene oxide", Chem. Soc. Rev., 39:228-240, see Figure 16). The use of the described RGO sheets having hydrophobic properties as a separator material in Li-S batteries, however, is not envisaged or suggested.

Lomeda *et al.* (*ibid.*) also discloses on page 16202 ("Scheme 1") a chemically modified reduced graphene oxide material comprising halogen-substituted phenyl moieties. Chemical modification with fluoro-substituted phenyl moieties, however, is not disclosed.

Although the performance of sulfur-containing batteries including RGO-based separators is better than the performance of other conventional separator materials, it is still desirable to further improve the performance. In particular, the cycle-to-cycle loss of capacity of the battery remains to be reduced.

### Summary of the invention

The present invention solves the above stated shortcomings of the prior art by employing chemically modified reduced graphene oxide (CMRGO) sheets as a separator material in sulfur-containing batteries, such as Li-S batteries. In particular, the present invention addresses the need for more efficient and long-lived sulfur-containing batteries, such as Li-S batteries, exhibiting a significantly reduced cycle-to-cycle loss of capacity and coulombic efficiency. The use of CMRGO materials for producing a separator in a sulfur-containing battery, and methods of making such batteries are also encompassed.

The present invention relates to a sulfur-containing battery comprising a cathode, an anode, an electrolyte medium and a separator structure, wherein the separator includes a chemically modified reduced graphene oxide material having hydrophobic surface characteristics.

The present invention further relates to a sulfur-containing battery comprising a cathode, an anode, an electrolyte medium and a separator structure, characterized in that said separator structure comprises chemically modified reduced graphene oxide (CMRGO) having the structure:

RGO[-X]$_q$,

wherein: RGO is reduced graphene oxide; each X is selected, or independently selected, from the group consisting of halogen, substituted or unsubstituted alkyl, substituted or unsubstituted alkenyl, substituted or unsubstituted alkoxy, substituted or unsubstituted aryl, substituted or unsubstituted alkylaryl, substituted or unsubstituted arylalkyl, substituted or unsubstituted cycloalkyl, and substituted or unsubstituted heterocyclyl; preferably substituted aryl; and q is an integer greater than zero.

In one embodiment, at least one of said substituted X is halogen-substituted, preferably F-substituted, or $CF_3$-substituted.

In another embodiment each said X, or each said substituted X, is halogen-substituted, preferably F-substituted, or $CF_3$-substituted.

In yet another embodiment at least one substituted X further comprises a sulfonyl-group.

In yet another embodiment each X is independently selected from the group consisting of -F, - $CF_3$, fluorinated $C_2$-$C_{12}$ alkyl, fluorinated $C_3$-$C_{12}$ alkenyl, fluorinated phenyl, fluorinated alkylphenyl, 4-fluorophenyl, 4-(trifluoromethyl) phenyl, and 4-((trifluoromethyl)sulfonyl) phenyl.

In yet another embodiment all X are the same.

In preferred embodiments, the CMRGO comprises covalently bound aromatic groups, such as benzene groups containing fluoro or fluorinated functional substituents in para position.

In yet another embodiment 1 to 95%, or 2 to 90%, or 4 to 80%, or 10 to 70% of the carbon atoms forming a hexagonal pattern of carbon atoms of said RGO are substituted with X.

Preferably the battery is a Li-S battery.

In yet another embodiment the CMRGO has an atomic C:O ratio above 5, e.g., from 5 to 1000, or from 5 to 100, or from 5 to 50, or from 5 to 20, or from 9 to 20. The C:O ratio may be infinite, *i.e.,* no oxygen may be present in the CMRGO material.

In yet another embodiment the CMRGO comprises 10 to 80% of heteroatoms (i.e., non-carbon atoms), relative to the number of carbon atoms in the CMRGO.

In yet another embodiment the CMRGO further comprises nitrogen.

The nitrogen is preferably present at an atomic C:N ratio of above 5, e.g., from 5 to 100, or from 5 to 20, or from 10 to 20. Nitrogen in the CMRGO is often a result of a reduction of the graphene oxide with hydrazine monohydrate.

In yet another embodiment the separator structure further comprises a porous film or a fibrous sheet, such as a glass fiber sheet, or paper with embedded glass fibers.

In yet another embodiment the CMRGO material is supported by the porous film or the fibrous sheet.

In yet another embodiment the CMRGO material is self-standing and separately provided from said porous film or said fibrous sheet in said separator structure.

In yet another embodiment said CMRGO material forms a contiguous layer of said material, co-extending with said separator structure. The contiguous layer may have a thickness of preferably from 0.1 to 100 $\mu$m, or 1 to 50 $\mu$m, or 10 to 50 $\mu$m.

In yet another embodiment said CMRGO material is present in at least 3, or 5, or 10 layers, but preferably not more than 100 layers of CMRGO. Other embodiments having 1-50, 2-40 and 3-30 layers of CMRGO, on average, are also envisioned.

In yet another embodiment, the CMRGO is admixed with a binder, preferably one selected from the group consisting of PVDF, PTFE, EPDM, and PEO. In yet another embodiment the weight ratio between the binder and the CMRGO is from 1 to 25 wt%.

Preferably, the CMRGO material is inert towards the electrolyte, the lithium anode and the cathode composite.

The layer of (in particular of a self-standing layer of) the CMRGO in the separator structure is preferably permeable to lithium ions.

Another aspect of the invention relates to the use of a CMRGO having the above described structure and properties as a separator material in a sulfur-containing battery, such as a Li-S battery.

Yet another aspect of the invention relates to a method of making a sulphur-containing battery comprising a cathode, an anode, an electrolyte medium and a separator structure, wherein said method comprises making a modified reduced graphene oxide material having the above described structure and properties, and incorporating said modified reduced graphene oxide material in said separator structure.

Preferably, the step of making said modified reduced graphene oxide material includes functionalization of a reduced graphene oxide sheet with an agent selected from the group consisting of fluorobenzenediazonium, 4-(trifluoromethyl)benzenediazonium and 4-((trifluoromethyl)sulfonyl)benzenediazonium tetrafluoroborate.

Yet another aspect of the invention relates to a novel chemically modified reduced graphene oxide having the structure: RGO[-X]$_q$, wherein: RGO is reduced graphene oxide; each X is selected, or independently selected, from the group consisting of fluoro-substituted alkyl, fluoro-substituted alkenyl, fluoro-substituted alkoxy, fluoro-substituted aryl,

fluoro-substituted alkylaryl, fluoro-substituted arylalkyl, fluoro-substituted cycloalkyl, and fluoro-substituted heterocyclyl; preferably fluoro-substituted aryl; and q is an integer greater than zero. Fluoro-substitution in this aspect is preferably substitution by -F or $-CF_3$. These novel compounds show surprising properties when used in batteries according to the invention. In other preferred embodiments, X is selected from the group consisting of $-CF_3$, fluorinated $C_2$-$C_{12}$ alkyl, fluorinated $C_3$-$C_{12}$ alkenyl, fluorinated phenyl, fluorinated alkylphenyl, 4-fluorophenyl, 4-(trifluoromethyl) phenyl, and 4-((trifluoromethyl)sulfonyl) phenyl; preferably fluorinated phenyl, fluorinated alkylphenyl, 4-fluorophenyl, 4-(trifluoromethyl) phenyl, and 4-((trifluoromethyl)sulfonyl) phenyl, most preferred 4-fluorophenyl, 4-(trifluoromethyl) phenyl, and 4-((trifluoromethyl)sulfonyl) phenyl.

## Brief description of the figures

Figure 1 shows an electron microscopic picture of a separator material including CMRGO material according to the invention. The material is deposited on a supporting layer of glass fibers.

Figure 2 shows another electron microscopic picture of a separator material according to the invention at a lower magnification.

Figure 3 shows the specific capacity of Li-S batteries over cycle number. Conventional Li-S batteries are compared with Li-S batteries including CMRGO materials of the invention.

## Detailed description of the invention

As used herein and unless otherwise stated the term "cathode" is used to identify a positive electrode and "anode" is used to identify the negative electrode of an electrochemical cell or battery.

The term "battery" is used to denote a collection of one or more electrochemical cells arranged to provide electrical energy. The terms "cell", "electrochemical cell" and "battery" may be used interchangeably.

An "electrolyte medium", in the context of the present invention, shall be understood as defining any liquid comprising a solvent and an electrolyte, preferably in dissolved form. Preferably, lithium is not reacting in electrolyte media of the invention. The electrolyte medium preferably comprises lithium ions. The electrolyte medium may be liquid, or in form of a gel. The electrolyte may be present in the electrolyte medium in an amount of from 0.2 to 2.0 M, or 0.3 to 1.5 M, or 0.5 to 1.2 M. Suitable electrolyte media, in the context of the present invention, are generally known. Specific reference is made to the electrolyte media mentioned in paragraphs [0093] to [0096] of WO 2013/109824, the specific content of which paragraphs is hereby included by reference, to the extent permitted. In preferred embodiments, the electrolyte medium comprises a polar solvent with a dissolved lithium salt. The solvent may be from the family of glymes, sulfolanes and ethers.

"Graphene", in the context of the present invention, shall be understood as being one of the crystalline forms of carbon. Graphene comprises carbon atoms arranged in a regular two-dimensional hexagonal pattern. The hexagonal pattern is also referred to as a "honeycomb pattern". A graphene sheet preferably comprises only a single layer of the hexagonal carbon pattern. A single molecule of graphene, within the context of the present invention, is also referred to as a "graphene sheet". According to one embodiment, "graphene" is understood as defining a molecule consisting substantially of (or consisting of, or comprising) a regular two-dimensional hexagonal pattern formed by carbon atoms, preferably comprising only a single layer of said hexagonal pattern. A graphene sheet does normally not include substantial numbers of holes or voids in the hexagonal pattern. In preferred embodiments of the invention, a graphene sheet or molecule comprises only carbon atoms. In other words, the carbon atoms of the hexagonal pattern are un-substituted with substituents. Hence, a graphene, within the context of the present invention, may include greater than 95%, or greater than 99%, or greater than 99.9%, or most preferably 100% of carbon atoms relative to the total number of atoms of the graphene molecule.

"Graphene oxide", in the context of the present invention, shall be understood as being an oxidized form of graphene. Preferably, the oxidized form of graphene comprises hydroxyl, carboxy, and/or epoxy functional groups. The hydroxyl, carboxy, and/or epoxy functional groups are preferably covalently attached to carbon atoms of the two-dimensional hexagonal pattern of carbon atoms. In one embodiment, a graphene oxide molecule may thus be defined as a regular hexagonal pattern, or honeycomb structure, formed from carbon atoms comprising at least one functional group selected from hydroxyl group, carboxyl group, and epoxy group. Alternatively, graphene oxide may be defined as a regular two-dimensional hexagonal pattern formed from carbon atoms, wherein at least one of the carbon atoms of the pattern is covalently connected to a hydroxyl, carboxyl, or epoxy functional group. Graphene oxide, in accordance with the present invention, preferably has an atomic carbon to oxygen (C:O) ratio of lower than 5, preferably from 2 to 5. In

a preferred embodiment, graphene oxide is thus defined as a molecule comprising a regular hexagonal pattern of carbon atoms, a fraction of which carbon atoms being individually substituted with one of hydroxyl-, carboxyl- or epoxy functional groups, wherein the molecule has a C:O ratio of below 5.

"Reduced graphene oxide" (RGO), in the context of the present invention, shall be understood as being the product of a reaction of graphene oxide with a reducing agent, e.g., hydrazine monohydrate. Hence, RGO may be defined as a molecule comprising a hexagonal pattern of carbon atoms, (preferably a single-layered hexagonal pattern of carbon atoms) wherein at least a portion of said carbon atoms is substituted, or individually substituted, with one of hydroxyl, carboxyl or epoxy functional groups. The reduction of graphene oxide may lead to the elimination of carbon atoms from the two-dimensional hexagonal pattern of carbon atoms. Hence, the RGO may comprise holes (or voids, or unoccupied corners) in the hexagonal pattern of carbon atoms. In other words, not all carbon atom positions of the hexagonal pattern are necessarily occupied by carbon atoms. The hexagonal pattern may, e.g., have of from 0.1 to 40%, or form 1 to 30%, or from 1 to 20% unoccupied carbon atom positions in the hexagonal pattern, based on the total number of carbon atom positions in the hexagonal pattern. The reduction of the graphene oxide may be incomplete. Hence, RGO may still comprise oxygen-containing moieties selected from hydroxy, carboxy and epoxy functional groups. Preferred RGO molecules exhibit a C:O ratio of equal to or greater than 5:1. It is to be noted that, despite the fact that RGO is obtained from graphene by oxidation and subsequent reduction (*i.e.,* reversal of the oxidation), the electronic properties of RGO are significantly different from those of graphene (see e g., Tung et al., Nature Nanotech, 4: 25 (2009)).

In the context of the present invention, the expression "chemically modified reduced graphene oxide" (CMRGO) relates to RGO which is chemically modified, *e.g.,* to impart a hydrophobic surface on the CMRGO molecule or sheet. In a preferred embodiment, from 0.1 to 50%, or from 1 to 50%, or at from 2 to 40%, or from 5 to 40% of the carbon atoms of the hexagonal pattern are substituted with a hydrophobic substituent (*i.e.,* "X" in the language of the appended claims). CMRGO materials of the invention preferably have a C:O ratio of equal to or greater than 5, *e.g.,* from 5 to 100, or from 5:1 to 1000:1. (Here, oxygen atoms possibly present in oxygen-containing "X"-substituents of course contribute to the C:O ratio.)

A surface shall be considered a "hydrophobic surface" according to the invention, if the surface exhibits a water contact angle as determined by the ISO 15989:2004 standard method of equal to or greater than 90°. A CMRGO material is tested for hydrophobicity by forming a contiguous film from CMRGO sheet and determining hydrophobicity of the continuous film using the 90° contact angle criterion. The material is regarded as having a hydrophobic surface, if the contiguous film has a hydrophobic surface as determined by the ISO 15989:2004 standard.

A "separator" or a "separator structure", in the context of the present invention, shall be understood as being any structure separating the anode and the cathode of a battery. A separator may comprise a porous film, or a fibrous sheet, or both, the porous film or fibrous sheet being arranged between the anode and the cathode in a battery or electrochemical cell. The separator may further accommodate an electrolyte. A separator according to the invention comprises a CMRGO material of the invention. The CMRGO material may be self-standing (i.e., lacking or not needing a solid support structure) or it may be deposited on, or in, a solid support, such as a porous film or a fibrous sheet. If a support structure is present, the CMRGO is preferably deposited on the porous film or on the fibrous sheet. The CMRGO may, however, also form a layer separately provided from the porous film or fibrous sheet. The separate layers may then nevertheless be considered as jointly forming the separator of the battery. In accordance with a preferred embodiment of the invention, the separator may include a contiguous film comprising from multiple layers of CMRGO molecules or sheets. The thickness of the contiguous film may be from 1 to 1000 layers, or 10 to 500 layers, or 10 to 100 layers of the CMRGO (sheet) material.

A "substituent", in the context of the present invention, is any chemical group attachable to the RGO surface. Substituents of the present invention are preferably hydrophobic substituents, *i.e.,* the substituent preferably creates a hydrophobic surface on the CMRGO sheet, when attached thereto. The substituent, or the substituents, of the invention is/are preferably provided at an areal density on the CMRGO material so as to result in a hydrophobic surface, as defined above. Preferred substituents are the ones expressly mentioned hereinbelow, in particular, those denoted "X" in the appended claims. These include, without limitation, halogens, such as fluorine, chlorine, bromine; substituted or non-substituted organic substituents, halogen-substituted organic substituents, and others. The permeability of the separator towards lithium and polysulfides may be controlled by varying the amount and type of hydrophobic substituents on the surface of the CMRGO material. The term "sulfur compound" as used herein refers to any compound that includes at least one sulfur atom, e.g., elemental sulfur. The sulfur compound may also include other sulfur compounds, such as lithiated sulfur compounds including disulfide compounds and polysulfide compounds. Sulfur compounds suitable for lithium batteries are well known in the art. Suitable compounds are disclosed, e.g., in Naoi et al. 1997 ("A New Entergy Storage Material: Organosulfur Compounds Based on Multiple Sulfur- Sulfur Bonds", J. Electrochem. Soc, 144(6): L170-L172), reference to which is hereby made to the extent permitted.

"Alkyl" refers to a straight or branched hydrocarbon chain radical consisting of carbon and hydrogen atoms, containing no saturation, having one to eight carbon atoms, and which is attached to the rest of the molecule by a single bond, e.g., methyl, ethyl, n-propyl, i-propyl, n-butyl, t-butyl, n-pentyl, etc. Alkyl radicals may be optionally substituted by

one or more substituents such as a aryl, halo, hydroxy, alkoxy, carboxy, cyano, carbonyl, acyl, alkoxycarbonyl, amino, nitro, mercapto, alkylthio, etc. If substituted by aryl we have an "Aralkyl" radical, such as benzyl and phenethyl.

"Alkenyl" refers to an alkyl radical having at least 2 C atoms and having one or more unsaturated bonds.

"Cycloalkyl" refers to a stable 3-to 10-membered monocyclic or bicyclic radical which is saturated or partially saturated, and which consist solely of carbon and hydrogen atoms, such as cyclohexyl or adamantyl. Unless otherwise stated specifically in the specification, the term "cycloalkyl" is meant to include cycloalkyl radicals which are optionally substituted by one or more substituents such as alkyl, halo, hydroxy, amino, cyano, nitro, alkoxy, carboxy, alkoxycarbonyl, etc.

"Aryl" refers to single and multiple ring radicals, including multiple ring radicals that contain separate and/or fused aryl groups. Typical aryl groups contain from 1 to 3 separated or fused rings and from 6 to about 18 carbon ring atoms, such as phenyl, naphthyl, indenyl, fenanthryl or anthracyl radical. The aryl radical may be optionally substituted by one or more substituents such as hydroxy, mercapto, halo, alkyl, phenyl, alkoxy, haloalkyl, nitro, cyano, dialkylamino, aminoalkyl, acyl, alkoxycarbonyl, etc.

"Heterocyclyl" refers to a stable 3 to 15 membered ring radical which consists of carbon atoms and from one to five heteroatoms selected from the group consisting of nitrogen, oxygen, and sulfur, preferably a 4 to 8 membered ring with one or more heteroatoms, more preferably a 5 or 6 membered ring with one or more heteroatoms. It may be aromatic or not. For the purposes of this invention, the heterocycle may be a monocyclic, bicyclic or tricyclic ring system, which may include fused ring systems; and the nitrogen, carbon or sulfur atoms in the heterocyclyl radical may be optionally oxidised; the nitrogen atom may be optionally quaternized; and the heterocyclyl radical may be partially or fully saturated or aromatic. Examples of such heterocycles include, but are not limited to, azepines, benzimidazole, benzothiazole, furan, isothiazole, imidazole, indole, piperidine, piperazine, purine, quinoline, thiadiazole, tetrahydrofuran, coumarine, morpholine; pyrrole, pyrazole, oxazole, isoxazole, triazole, imidazole, etc.

"Alkoxy" refers to a radical of the formula -ORa where Ra is an alkyl radical as defined above, e. g., methoxy, ethoxy, propoxy, etc.

"Amino" refers to a radical of the formula-$NH_2$, -NHRa or NRaRb, wherein Ra and Rb are alkyl radicals, optionally quaternized.

"Halo" or "halogen" refers to bromo, chloro, iodo or fluoro. Fluoro is preferred.

References herein to "substituted" groups (such as "substituted alkyl", etc.) in the compounds of the present invention refer to the specified moiety that may be substituted at one or more available positions by one or more suitable groups, *e.g.,* halogen such as fluoro, chloro, bromo and iodo, cyano, azido, alkanoyl such as a C1-6 alkanoyl group such as acyl and the like; carboxamido; alkyl groups including those groups having 1 to about 12 carbon atoms or from 1 to about 6 carbon atoms and more preferably 1-3 carbon atoms; alkenyl and alkynyl groups including groups having one or more unsaturated linkages and from 2 to about 12 carbon or from 2 to about 6 carbon atoms; alkoxy groups having one or more oxygen linkages and from 1 to about 12 carbon atoms or 1 to about 6 carbon atoms; aryloxy such as phenoxy; alkylthio groups including those moieties having one or more thioether linkages and from 1 to about 12 carbon atoms or from 1 to about 6 carbon atoms; alkylsulfnyl groups including those moieties having one or more sulfinyl linkages and from 1 to about 12 carbon atoms or from 1 to about 6 carbon atoms; alkylsulfonyl groups including those moieties having one or more sulfonyl linkages and from 1 to about 12 carbon atoms or from 1 to about 6 carbon atoms; aminoalkyl groups such as groups having one or more N atoms and from 1 to about 12 carbon atoms or from 1 to about 6 carbon atoms; carbocylic aryl having 6 or more carbons, particularly phenyl or naphthyl and aralkyl such as benzyl. Unless otherwise indicated, an optionally substituted group may have a substituent at each substitutable position of the group, and each substitution is independent of the other.

A "halogen-substituted" group in the compounds of the present invention refers to the specified moiety that is substituted at one or more available positions by one or more halogen atoms, such as fluoro, chloro, bromo and iodo, preferably fluoro and chloro, most preferred fluoro.

The present invention relates to hydrophobic graphene-based materials, in particular to CMRGO, and to its use in sulfur-containing electrochemical cells, such as in Li-S batteries.

The electrical separation between the lithium anode and the sulfur-compound containing cathode, according to the present invention, is achieved by at least one layer of CMRGO. The CMRGO is preferably modified to include at least one covalently bound hydrophobic substituent or functional group on its surface. The hydrophobic substituent may be any substituent capable of forming a hydrophobic surface on a CMRGO molecule or sheet. In one embodiment, without limitation, the hydrophobic substituent is a para-substituted aromatic molecule. Other hydrophobic substituent of the invention may also be used. The separator of the invention may be in form of a self-supporting film composed of multiple CMRGO sheets, or it may comprise a layer of CMRGO deposited on a porous film or on a fibrous sheet, such as glass fiber containing filter paper. The separator may also be formed from a porous film or fibrous sheet and a separately provided (preferably self-supporting) film composed of multiple CMRGO sheets. The separator of the invention preferably separates the two electrodes from each other, and serves as a reservoir for the electrolyte medium. In one embodiment the separator serves as an ionic conductor for lithium ions.

Without wishing to be bound by theory, it is believed that the presence of a hydrophobic surface on the CMRGO material effectively reduces polysulfide diffusion through the separator from sulfur-containing cathode to the metallic lithium anode, thus reducing irreversible loss of active sulfur in the battery.

In one embodiment, the CMRGO material of the present invention forms a layer of CMRGO material on a solid support, such as a woven sheet or a porous film. The layer is preferably a continuous layer of CMRGO sheets overlaying solid support. Alternatively the CMRGO may be deposited within a porous film, which porous film then supports a thin layer of CMRGO of the present invention. The CMRGO material may be dispersed in a porous film, such as a porous polymeric film. In accordance with another embodiment of the present invention, thin, elongated two-dimensional particles are deposited on a fibrous support for form a continuous film of CMRGO or the particles are deposited on a porous film of an insulating polymer. The role of the thin film of CMRGO is to effectively separate anode and the sulfur-containing cathode, and to form an ionic bridge for lithium cation in the electrolyte medium between the two electrodes. CMRGO material may be comprised in the porous or fibrous material of the separator so that the electrolyte medium can be soaked into the separator.

The chemical modification of the CMRGO of the present invention also makes the separator inert towards the chemical environment in the Li-S battery. Use of separator based on the CMRGO material with covalently bound hydrophobic substituents of the invention thus helps to stabilize the Li-S battery operation and increases the life-time of the battery.

CMRGO material of the invention may be mixed with binders, e.g., dispersed therein. Suitable binders are polyvinyldienfluoride (PVDF), polytetraflouroethylene (PTFE), ethylenepropylene-diene monomer rubber (EPDM), polyethylene oxide (PEO), or any combination of above mentioned polymeric binders. Generally binders can be selected from the family of polymers that that have adhesion properties and can wrap small particles into a homogenous layer. The polymeric binder preferably serves as a matrix in which the CMRGO sheets are dispersed. Depending on the morphology of CMRGO material, the quantity of the polymeric binder can be from above zero to 75 wt%, preferably from 1 to 50 wt%, or 1 to 25 wt%. The morphology of CMRGO and the ratio between the CMRGO particles and the binder have an influence on the permeability and pore volume in the deposited layer of the CMRGO material.

The use of hydrophobic CMRGO materials of the invention in the separator, according to the invention, preferably reduces or completely avoids polysulfide diffusion from the sulfur-containing cathode to the lithium anode in batteries of the invention. Substituents of the invention are preferably able to restrain or reduce diffusion of polysulfides to the anode, and they are compatible with the electrolytes used in the battery. CMRGO of the invention is preferably inert to all other components in the Li-S battery.

It is understood that any suitable hydrophobic substituent may be used. In one embodiment, the hydrophobic substituent is a covalently bound aromatic molecule, preferably a para-substituted aromatic group with fluorinated substituent. In particularly preferred embodiments, the hydrophobic substituent is selected from fluorophenyl, 4-(trifluoromethyl)phenyl, 4-((trifluoromethyl)sulfonyl)phenyl, 4-(tetrafluoroethyl)phenyl. Two or more of the above substituents can be used in combination.

The separator comprising CMRGO according to the invention preferably possesses the ability to take up or soak electrolyte medium.

The CMRGO may be in form of a single layer, so-called monolayer of graphene material. More preferably, however, the CMRGO material is in form of a multilayer film. The number of layers depends on the thickness of the individual CMRGO sheets and on the amount of binder optionally used in the preparation of the separator. Overall thickness of the CMRGO layer may vary from 0.1 to 100 $\mu$m and on the morphology of CMRGO particles, the substrate used for CMRGO deposition, and it may depend on the (surface) density of substituent groups on CMRGO. In preferred embodiments, the multilayer film comprises on average 1-500, or 1-100 or 10-100 layers of CMRGO (*e.g.,* determined as the average of 20 determinations at random positions on the multilayer film).

In one embodiment, a CMRGO-based multilayer film may be sandwiched between the sulfur-containing cathode and a porous polymeric film or fibrous sheet, e.g. a glass fiber sheet. The separator in such embodiments includes the porous polymeric film or fibrous sheet and a (separate) multilayer CMRGO film.

In one embodiment of the present invention, CMRGO is defined as a material obtainable by chemical modification of RGO. In this embodiment, RGO is defined as a material obtainable by oxidation of graphite using $KMnO_4$ and a mixture of $H_2SO_4$ and $HPO_4$ (the latter, e.g., in a molar ratio of 9:1) to form graphene oxide, and subsequent reduction of the graphene oxide with hydrazine to form RGO.

In preferred embodiments, batteries of the invention have a coulombic efficiency of greater than 50%, 80%, 90%, 95%, 98%, 99%, or 99% after 30 cycles of use, wherein the coulombic efficiency is defined as:

$$\eta_c = \frac{Q_{out}}{Q_{in}},$$

wherein

$\eta_c$ is the coulombic efficiency, $Q_{out}$ is the electric charge [C] that exits the battery during the discharge cycle and $Q_{in}$ is the amount of charge that enters the battery during the charging cycle [C].

In other preferred embodiments, the loss of specific capacity [mAh/g] from 10th to 80th cycle in batteries of the invention is less than 50%, less than 60%, less than 70%, or less than 80%, relative to the specific capacity at the 10th cycle.

**Examples**

*Examples 1: Synthesis of 4-fluorobenzenediazonium tetrafluoroborate (according to procedure published in Jian, H. H.; Tour, J. M. Journal of Organic Chemistry,* ***2005,*** *70, 3396)*

4-Fluorobezenediazonium tetrafluoroborate is synthesized according to the following reaction:

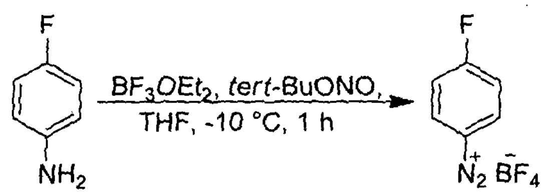


To a 250 mL two neck round-bottom flask charged with a solution of 18 mmol $BF_3OEt_2$ in 12 mL anhydrous tetrahydrofuran, cooled to -10°C, was added 4.5 mmol solution of 4-fluoroaniline in 12 mL anhydrous tetrahydrofuran, with good agitation. Then 15.80 mmol of tert-BuONO was added dropwise in an interval of 30 min. Yellow precipitation formed during agitation. After the tert-BuONO was added, the reaction mixture was stirred at - 10°C for at least 1 h. Anhydrous diethyl ether (120 mL) was then added. The reaction mixture was stirred and the brine/ice bath was allowed to warm to 0°C. The reaction mixture was filtered and the white powder was three times washed with diethyl ether.

*Example 2: Synthesis of 4-(trifluoromethyl)benzenediazonium tetrafluoroborate (according to procedure published in Jian, H. H.; Tour, J. M. Journal of Organic Chemistry, 2005, 70, 3396)*

4-(Trifluoromethyl)benzenediazonium tetrafluoroborate was produced using the following reaction scheme:

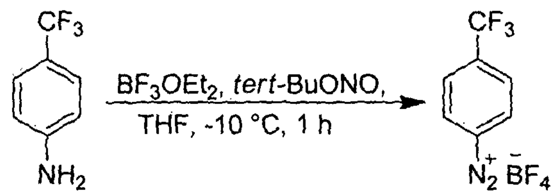


To a 250 mL two neck round-bottom flask charged with a solution of 24.8 mmol $BF_3OEt_2$ in 25 mL anhydrous tetrahydrofuran, cooled to -10°C, was added 6.21 mmol solution of 4-(trifluoromethyl)aniline in 25 mL anhydrous tetrahydrofuran, with good agitation. Then 21.7 mmol of tert-BuONO was added dropwise in an interval of 30 min. Yellow precipitation formed during agitation. After the tert-BuONO was added, the reaction mixture was stirred at - 10°C for at least 1 h. Anhydrous diethyl ether (120 mL) was then added. The reaction mixture was stirred and the brine/ice bath was allowed to warm to 0°C. The reaction mixture was filtered and the white powder was three times washed with diethyl ether.

*Example 3: Synthesis of 4-((trifluoromethyl)sulfonyl)benzenediazonium tetrafluoroborate (according to procedure published in Jian, H. H.; Tour, J. M. Journal of Organic Chemistry,* ***2005,*** *70, 3396)*

4-((Trifluoromethyl)sulfonyl)benzenediazonium tetrafluoroborate was produced using the following reaction scheme:

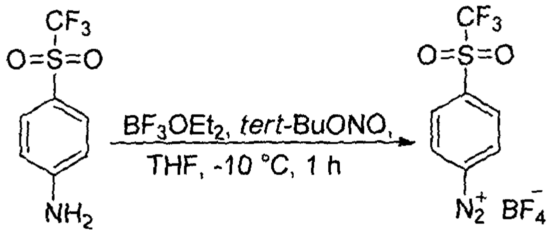


To a 250 mL two neck round-bottom flask charged with a solution of 4.08 mmol $BF_3OEt_2$ in 10 mL anhydrous tetrahydrofuran, cooled to -10°C, was added 1.02 mmol solution of 4-((trifluoromethyl)sulfonyl)aniline in 10 mL anhydrous tetrahydrofuran, with good agitation. Then 3.57 mmol of tert-BuONO was added dropwise in an interval of 30 min. Yellow precipitation formed during agitation. After the tert-BuONO was added, the reaction mixture was stirred at - 10°C for at least 1 h. Anhydrous diethyl ether (60 mL) was then added. The reaction mixture was stirred and the brine/ice bath was allowed to warm to 0°C. The reaction mixture was filtered and the white powder was three times washed with diethyl ether.

*Examples 4: Synthesis of graphene oxide (according to modified procedure published in Marcano et al. Acs Nano, 2010, 4, 4806)*

In a 9:1 mixture of concentrated $H_2SO_4$/$H_3PO_4$ (187.7: 20.1 mL) was added 5 g of graphite flakes and 25 g of $KMnO_4$, producing a slight exothermic reaction. The reaction was then stirred for 12 h. The reaction was cooled to room temperature and poured onto ice with 5 mL of 30 % $H_2O_2$. The product was centrifuged and washed with 10% HCl, MeOH and vacuum-dried overnight at room temperature. The reaction is schematically shown in the following scheme:

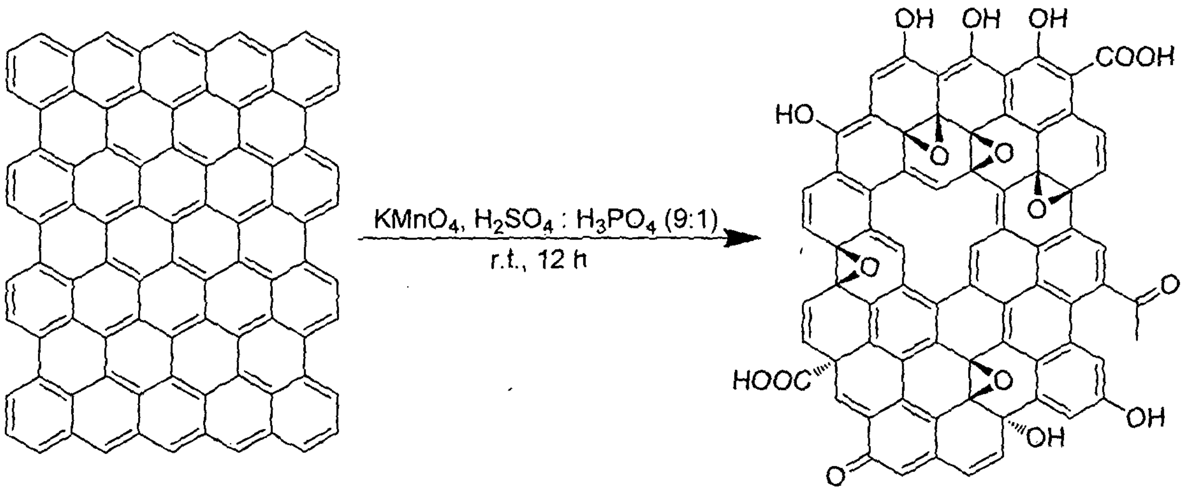


*Example 5: Syntheses of reduced graphene oxide (according to procedure published in Stankovich et. al. Carbon, **2007,** 45, 1558)*

0.2 mol of graphene oxide is dissolved in 200 mL water using ultrasonic finger probe. 0.7 mol of hydrazine hydrate was then added and the solution was refluxed one day. As graphene oxide was reducing it was gradually precipitated out as a black solid. The product was isolated by filttation and washed with water, ethanol and vacuum-dried overnight. The reaction is schematically shown in the following scheme:

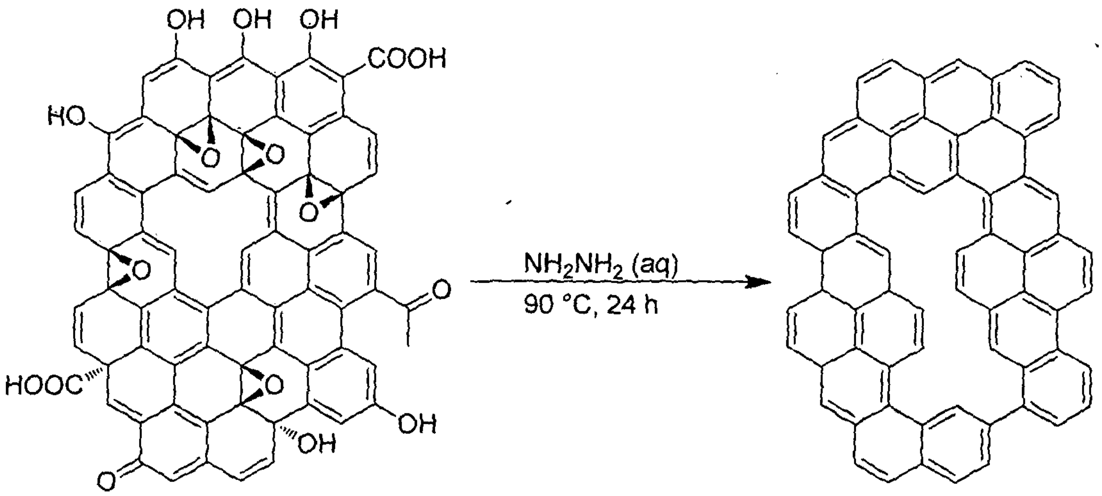


Note: Although no oxygen atoms are shown to remain in the reduced graphene oxide structure, above, such oxygen atoms are nevertheless likely to remain/be present in reduced graphene oxide, due to incomplete reduction of the graphene oxide. The shown structure of reduced graphene oxide is thus only exemplary, and not meant to be limiting the meaning and scope of the expression "reduced graphene oxide" (or "chemically modified reduced graphene oxide") in the context of the present invention.

*Example 6: Surface modification of reduced graphene oxide with 4-fluorobenzenediazonium tetrafluoroborate (according to modified procedure published in Lameda et. al. J. Am. Chem. Soc,* ***2008****, 130, 16201 - 16206)*

The surface of reduced graphene oxide was modified with 4-fluorobenzenediazonium tetrafluoroborate:

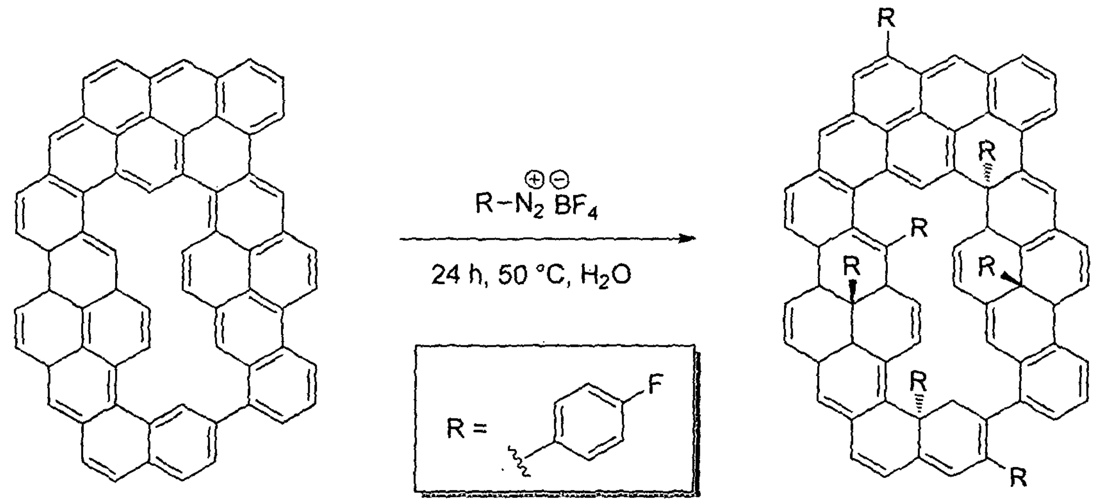


In a round-bottom flask we added in a mass ratio of 1:1 chemically converted graphene: 4-fluorobenzenediazonium tetraflouroborate in water. The solution was heated to 50°C one day. The product was filtrated with DMF, acetone, water and vacuum-dried overnight.

*Example 7: Surface modification of reduced graphene oxide with 4 - (trifluoromethyl)benzenediazonium tetrafluoroborate (according to modified procedure published in Lameda et. al. J. Am. Chem. Soc,* ***2008****, 130, 16201 - 16206)*

The surface of reduced graphene oxide was modified with 4 -(trifluoromethyl) benzenediazonium tetrafluoroborate:

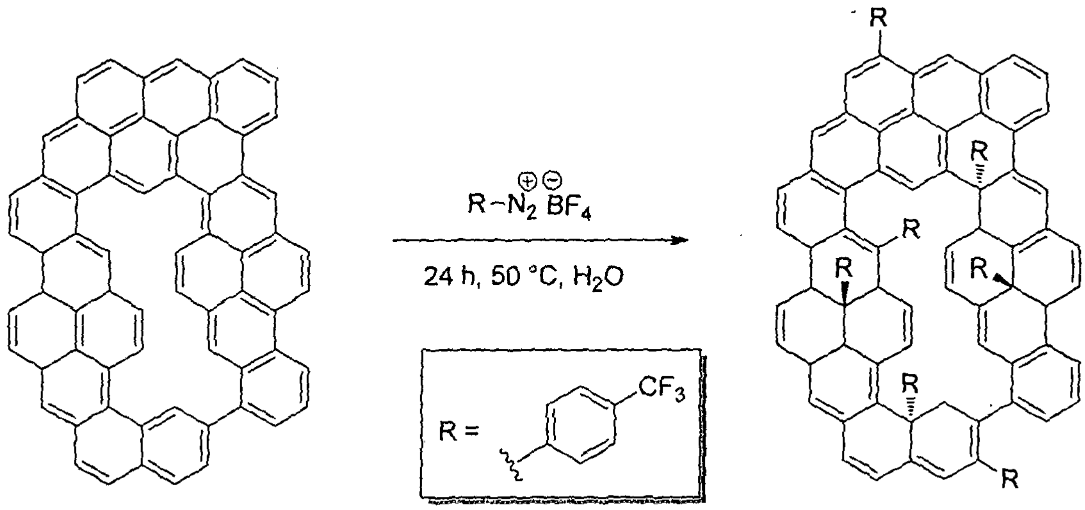


In a round-bottom flask we added in a mass ratio of 1:1 chemically converted graphene: 4-(trifluoromethyl)benzenediazonium tetraflouroborate in a water. The solution was heated to 50°C one day. The product was filtrated with DMF, acetone, water and vacuum-dried overnight.

*Example 8: Surface modification of reduced graphene oxide with 4-((trifluoromethyl)sulfonyl)benzenediazonium tetrafluoroborate (according to modified proredure published in Lameda et. al. J. Am. Chem. Soc,* ***2008,*** *130, 16201 - 16206)*

The surface of reduced graphene oxide was modified with 4-((trifluoromethyl)sulfonyl) benzenediazonium tetrafluoroborate:

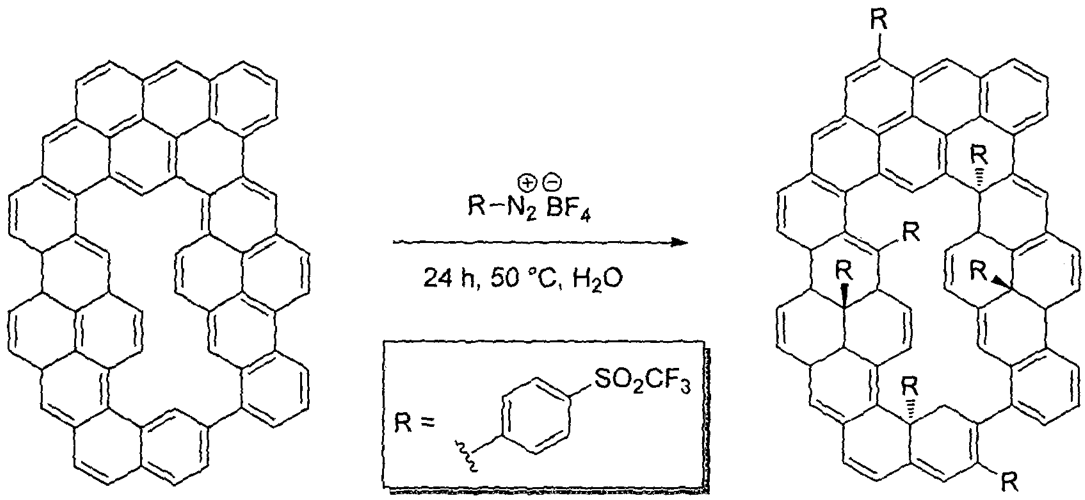


In a round-bottom flask we added in a mass ratio of 1:1 chemically converted graphene: 4-((trifluoromethyl)sulfonyl)benzenediazonium tetraflouroborate in a water. The solution was heated to 50°C one day. The product was filtrated with DMF, acetone, water and vacuum-dried overnight.

*Example 9: Electrochemical activity of lithium-sulfur cells with different types ofseparators*

CMRGO particles (i.e., sheets) with two different types of covalently bound aromatic groups were deposited on woven glass fiber sheets and used as a separator in lithium-sulfur cells. Cathode composite and a lithium anode were always of the same type. A comparison of the specific capacity [mAh/g] of cells of the invention with a control cell not including CMRGO is shown in Figure 3. Electrochemical cells were cycled with a current density 1,675 mA/g of sulfur in the voltage window between 3.0 V and 1.5 V versus metallic lithium reference. Significantly reduced deterioration of the specific capacity over cycle number is observed in batteries according to the invention.

## Claims

1. A sulfur-containing battery comprising a cathode, an anode, an electrolyte medium and a separator structure, **characterized in that** said separator structure comprises chemically modified reduced graphene oxide having the structure:

$$RGO[-X]_q,$$

wherein:

RGO is reduced graphene oxide;
each X is independently selected from the group consisting of halogen, substituted or unsubstituted alkyl, substituted or unsubstituted alkenyl, substituted or unsubstituted alkoxy, substituted or unsubstituted aryl, substituted or unsubstituted alkylaryl, substituted or unsubstituted arylalkyl, substituted or unsubstituted cycloalkyl, and substituted or unsubstituted heterocyclyl; preferably substituted aryl; and
q is an integer greater than zero.

2. The battery of claim 1, wherein at least one substituted X is halogen-substituted, preferably F-substituted, or $CF_3$-substituted.

3. The battery of claim 1, wherein each X is halogen-substituted, preferably F-substituted, or $CF_3$-substituted.

4. The battery of any one of the preceding claims, wherein at least one substituted X comprises a sulfonyl-group.

5. The battery of claim 1, wherein each X is independently selected from the group consisting of -F, $-CF_3$, fluorinated $C_2$-$C_{12}$ alkyl, fluorinated $C_3$-$C_{12}$ alkenyl, fluorinated phenyl, fluorinated alkylphenyl, 4-fluorophenyl, 4-(trifluoromethyl)phenyl, and 4-((trifluoromethyl)sulfonyl)phenyl.

6. The battery of any one of the preceding claims, wherein all X are identical.

7. The battery of any one of the preceding claims, wherein 4 to 80% of the carbon atoms forming the hexagonal pattern of carbon atoms of said RGO are substituted with X.

8. The battery of any one of the preceding claims, wherein the battery is a Li-S battery.

9. The battery of any one of the preceding claims, wherein said separator structure further comprises a porous film or a fibrous sheet, such as a glass fiber sheet.

10. The battery of claim 9, wherein said chemically modified reduced graphene oxide material is supported by said porous film or said fibrous sheet.

11. The battery of claim 10, wherein said chemically modified reduced graphene oxide material is self-standing and separately provided from said porous film or said fibrous sheet in said separator structure.

12. The battery of any one of the preceding claims, wherein said chemically modified reduced graphene oxide material forms a contiguous layer of said material, co-extending with said separator structure.

13. The battery of any one of the preceding claims, wherein chemically modified reduced graphene oxide is admixed with a binder selected from the group consisting of PVDF, PTFE, EPDM, and PEO.

## Patentansprüche

1. Schwefelhaltige Batterie umfassend eine Kathode, eine Anode, ein Elektrolytmedium und eine Separatorstruktur, **dadurch gekennzeichnet, dass** die Separatorstruktur chemisch modifiziertes reduziertes Graphenoxid mit der Struktur:

$$RGO[-X]_q,$$

umfasst, wobei:

RGO reduziertes Graphenoxid ist;
jedes X unabhängig ausgewählt ist aus der Gruppe bestehend aus Halogen, substituiertem oder unsubstituiertem Alkyl, substituiertem oder unsubstituiertem Alkenyl, substituiertem oder unsubstituiertem Alkoxy, substituiertem oder unsubstituiertem Aryl, substituiertem oder unsubstituiertem Alkylaryl, substituiertem oder unsubstituiertem Arylalkyl, substituiertem oder unsubstituiertem Cycloalkyl und substituiertem oder unsubstituiertem Heterocyclyl; vorzugsweise substituiertem Aryl; und
q eine ganze Zahl größer als Null ist.

2. Batterie nach Anspruch 1 wobei wenigstens ein substituiertes X Halogen-substituiert, vorzugsweise F-substituiert, oder $CF_3$-substituiert ist.

3. Batterie nach Anspruch 1, wobei jedes X Halogen-substituiert, vorzugweise F-substituiert, oder $CF_3$-substituiert ist.

4. Batterie nach einem der vorangehenden Ansprüche, wobei wenigstens ein substituiertes X eine Sulfonylgruppe umfasst.

5. Batterie nach Anspruch 1, wobei jedes X unabhängig ausgewählt ist aus der Gruppe bestehend aus -F, $-CF_3$, fluoriertem $C_2$-$C_{12}$-Alkyl, fluoriertem $C_3$-$C_{12}$-Alkenyl, fluoriertem Phenyl, fluoriertem Alkylphenyl, 4-Fluorphenyl, 4-(Trifluormethyl)phenyl und 4-((Trifluormethyl)sulfonyl)phenyl.

6. Batterie nach einem der vorangehenden Ansprüche, wobei alle X identisch sind.

7. Batterie nach einem der vorangehenden Ansprüche, wobei 4 bis 80 % der Kohlenstoffatome, die das hexagonale Muster von Kohlenstoffatomen des RGO bilden, mit X substituiert sind.

8. Batterie nach einem der vorangehenden Ansprüche, wobei die Batterie eine Li-S-Batterie ist.

9. Batterie nach einem der vorangehenden Ansprüche, wobei die Separatorstruktur außerdem einen porösen Film oder eine faserartige Folie, wie etwa eine Glasfaserfolie umfasst.

10. Batterie nach Anspruch 9, wobei das chemisch modifizierte reduzierte Graphenoxidmaterial von dem porösen Film oder der faserartigen Folie gestützt bzw. getragen wird.

11. Batterie nach Anspruch 10, wobei das chemisch modifizierte reduzierte Graphenoxidmaterial selbstständig stehend ist und getrennt von dem porösen Film oder der faserartigen Folie in der Separatorstruktur bereitgestellt ist.

12. Batterie nach einem der vorangehenden Ansprüche, wobei das chemisch modifizierte reduzierte Graphenoxidmaterial eine zusammenhängende Schicht des Materials bildet, die sich mit der Separatorstruktur gemeinsam erstreckt.

13. Batterie nach einem der vorangehenden Ansprüche, wobei chemisch modifiziertes reduziertes Graphenoxid mit einem Bindemittel vermischt ist, das aus der aus PVDF, PTFE, EPDM und PEO bestehenden Gruppe ausgewählt ist.

**Revendications**

1. Batterie contenant du soufre comprenant une cathode, une anode, un milieu électrolyte et une structure formant séparateur, **caractérisée en ce que** ladite structure formant séparateur comprend de l’oxyde de graphène réduit chimiquement modifié présentant la structure :

$$RGO[-X]_q,$$

où :

RGO est de l’oxyde de graphène réduit ;
chaque X est indépendamment sélectionné dans le groupe constitué d’un groupe halogéno, alkyle substitué

ou non substitué, alcényle substitué ou non substitué, alcoxy substitué ou non substitué, aryle substitué ou non substitué, alkylaryle substitué ou non substitué, arylalkyle substitué ou non substitué, cycloalkyle substitué ou non substitué, et hétérocyclyle substitué ou non substitué ; préférablement aryle substitué ; et
q est un nombre entier supérieur à zéro.

**2.** Batterie selon la revendication 1, dans laquelle au moins un X substitué est substitué par un groupe halogéno, préférablement substitué par du F, ou substitué par un groupe $CF_3$.

**3.** Batterie selon la revendication 1, dans laquelle chaque X est substitué par un groupe halogéno, préférablement substitué par F, ou substitué par $CF_3$.

**4.** Batterie selon l'une quelconque des revendications précédentes, dans laquelle au moins un X substitué comprend un groupe sulfonyle.

**5.** Batterie selon la revendication 1, dans laquelle chaque X est indépendamment sélectionné parmi le groupe constitué de -F, -$CF_3$, du groupe alkyle en $C_2$ à $C_{12}$ fluoré, alcényle en $C_3$ à $C_{12}$ fluoré, phényle fluoré, alkylphényle fluoré, 4-fluorophényle, 4-(trifluorométhyl)phényle, et 4-((trifluorométhyl)sulfonyl)phényle.

**6.** Batterie selon l'une quelconque des revendications précédentes, dans laquelle tous les X sont identiques.

**7.** Batterie selon l'une quelconque des revendications précédentes, dans laquelle 4 à 80 % des atomes de carbone formant le motif hexagonal des atomes de carbone dudit RGO sont substitués par X.

**8.** Batterie selon l'une quelconque des revendications précédentes, la batterie étant une batterie Li-S.

**9.** Batterie selon l'une quelconque des revendications précédentes, ladite structure formant séparateur comprenant en outre un film poreux ou une feuille fibreuse, telle qu'une feuille de fibre de verre.

**10.** Batterie selon la revendication 9, ledit matériau oxyde de graphène réduit chimiquement modifié étant supporté par ledit film poreux ou ladite feuille fibreuse.

**11.** Batterie selon la revendication 10, dans laquelle ledit matériau d'oxyde de graphène réduit chimiquement modifié est autonome et prévu séparément dudit film poreux ou de ladite feuille fibreuse dans ladite structure formant séparateur.

**12.** Batterie selon l'une quelconque des revendications précédentes, dans laquelle ledit matériau d'oxyde de graphène réduit chimiquement modifié forme une couche contiguë dudit matériau, en co-extension avec ladite structure formant séparateur.

**13.** Batterie selon l'une quelconque des revendications précédentes, ledit oxyde de graphène réduit chimiquement modifié étant mélangé par admixtion avec un liant sélectionné dans le groupe constitué du PVDF, PTFE, EPDM, et PEO.

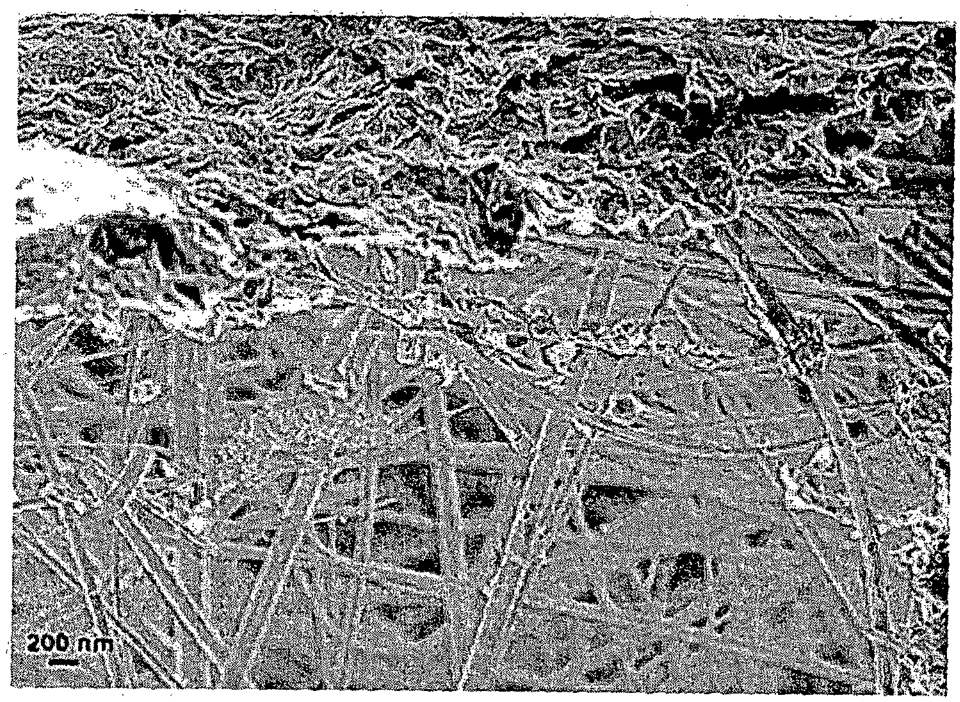


Fig. 1

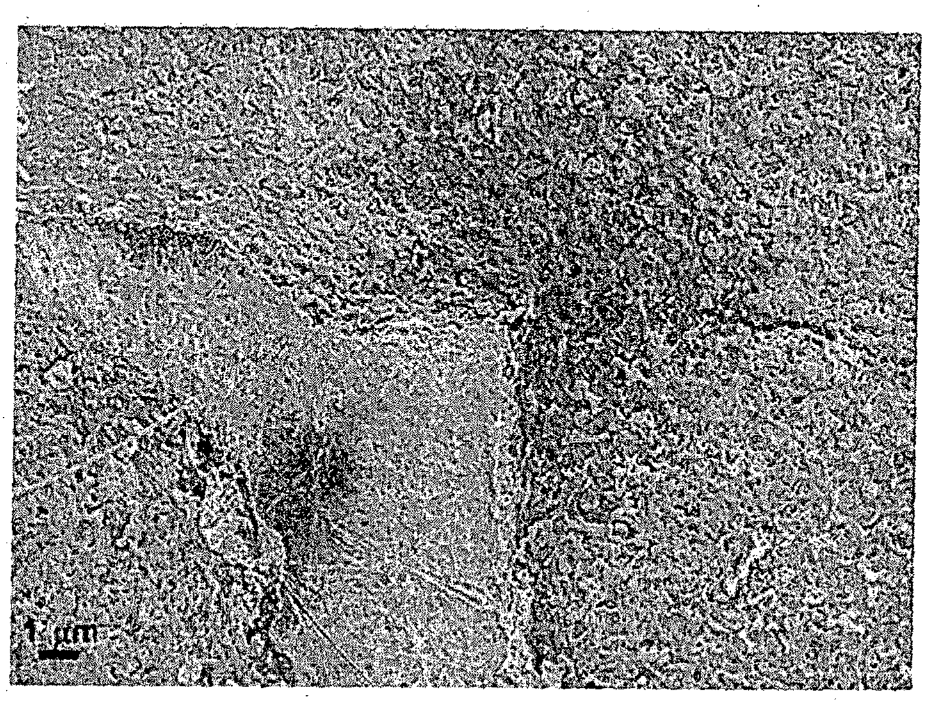


Fig. 2

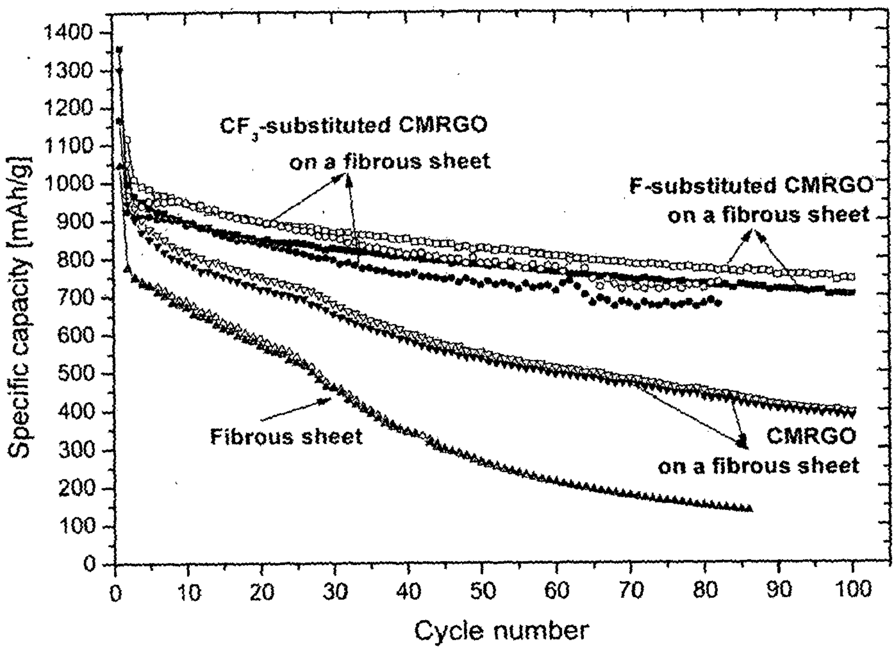

Specific capacity [mAh/g]
Cycle number
CF3-substituted CMRGO on a fibrous sheet
F-substituted CMRGO on a fibrous sheet
Fibrous sheet
CMRGO on a fibrous sheet


Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013109824 A


### Non-patent literature cited in the description


- **WANG, X. et al.** Reduced graphene oxide film as a shuttle-inhibiting interlayer in a lithium-sulfur battery. *Journal of Power Sources,* 2013, vol. 242, 65-69
- **WANG, Z. et al.** Synthesis of fluorinated graphene with tunable degree of fluorination. *Carbon,* 2012
- **AKSHAY et al.** Synthesis of fluorinated graphene oxide and its amphiphobic properties. *Part. Part. Syst. Charact.,* 2012, vol. 30, 266-272
- **ROBISON et al.** Properties of fluorinated graphene films. *Nano Lett.,* 2010, vol. 10, 3001-3005
- **LOMEDA et al.** Diazonium functionalization of surfactant-wrapped chemically converted graphene sheets. *JACS,* 2008, vol. 130, 16201-16206
- **DREYER et al.** The chemistry of graphene oxide. *Chem. Soc. Rev.,* 2010, vol. 39, 228-240
- **TUNG et al.** *Nature Nanotech,* 2009, vol. 4, 25
- **NAOI et al.** A New Entergy Storage Material: Organosulfur Compounds Based on Multiple Sulfur- Sulfur Bonds. *J. Electrochem. Soc,* 1997, vol. 144 (6), L170-L172